# EUROPEAN PATENT APPLICATION

(11) **EP 4 826 817 A1**
(43) Date of publication of application: **21.10.2026**
(21) Application number: 24928940.6
(22) Date of filing: 15.03.2024
(51) Int. Cl.: H01M 10/0525, H01M 10/04

(54) **BATTERY CELL, BATTERY PACK, ELECTRIC DEVICE, AND ENERGY STORAGE DEVICE**

(71) Applicant: Contemporary Amperex Technology Co., Limited, Ningde, Fujian 352100 (CN)
(72) Inventor: SUN, Longli, Ningde, Fujian 352100 (CN)
(74) Representative: Straus, Alexander
(86) International application number: PCT/CN2024/082005
(87) International publication number: WO 2025/189469

(57) **Abstract**

A battery cell, a battery pack, an electric device, and an energy storage device used in the technical field of batteries. The battery cell comprises a casing and at least two groups of bare cells. An accommodating cavity is formed in the casing; the at least two groups of bare cells are disposed in the accommodating cavity; each bare cell comprises at least two layers of electrode sheets; the at least two layers of electrode sheets are stacked in a thickness direction; the same group of bare cells are stacked in the thickness direction; and different groups of bare cells are spread in a plane perpendicular to the thickness direction. Different groups of bare cells are spread in the plane perpendicular to the thickness direction, thereby reducing the number of stacked bare cells, and the major surfaces of different groups of bare cells will not press each other, so that the swelling force of the major surfaces can be reduced, the breakage risk of the electrode sheets is reduced, and the service life of the battery cell is prolonged.

## Description

### TECHNICAL FIELD

The present application relates to the field of battery technologies, and in particular, to a battery cell, a battery pack, a power consuming apparatus, and an energy storage apparatus.

### BACKGROUND

Batteries are being increasingly widely used in daily life and production. For example, new energy vehicles equipped with batteries have been widely used. Batteries can be used to provide power, either entirely or partially, for new energy vehicles. Additionally, batteries are also being increasingly used in fields such as energy storage.

In the related technology, in a long-term cyclic use process of a battery, a bare cell is prone to problems such as fracture caused by excessively large swelling force of an electrode plate.

### SUMMARY

In view of this, embodiments of this application expect to provide a battery cell, a battery pack, a power consuming apparatus, and an energy storage apparatus, to mitigate a problem of fracture caused by excessively large swelling force of an electrode plate.

To achieve the foregoing objective, the technical solutions in the embodiments of this application are implemented as follows:

According to a first aspect, an embodiment of this application provides a battery cell, including:
a housing, formed with an accommodating cavity; and
at least two groups of bare cells, all disposed in the accommodating cavity, where each bare cell includes at least two electrode plates, the at least two electrode plates are stacked in a thickness direction, the bare cells in a same group are stacked in the thickness direction, and the bare cells in different groups are arranged side by side along a plane perpendicular to the thickness direction.

In this embodiment, the bare cells in different groups are arranged side by side along the plane perpendicular to the thickness direction, thereby reducing a quantity of stacked bare cells, and major surfaces of the bare cells in different groups are kept from pressing each other, so that swelling force on the major surfaces can be reduced, a risk of electrode plate fracture can be reduced, and the service life of the battery cell can be prolonged.

In some embodiments, a total thickness of each group of bare cells in the thickness direction ranges from 30 mm to 80 mm.

In this embodiment, a single bare cell includes at least two electrode plates, each group of bare cells includes at least one bare cell, the total thickness of each group of bare cells in the thickness direction ranges from 30 mm to 80 mm, so that compressive force between the electrode plates and energy density of each group of bare cells are moderate, and while energy density is maintained, a risk of electrode plate fracture is reduced.

In some embodiments, a dimension of a single bare cell in the thickness direction ranges from 8 mm to 20 mm.

In this embodiment, manufacturing difficulty of the bare cell is moderate, the yield can be improved, and the bare cell has suitable energy density.

In some embodiments, a quantity of the bare cells in each group ranges from 1 to 4.

In this embodiment, stacking difficulty can be reduced.

In some embodiments, each bare cell includes at least two tabs connected to the electrode plates, and the two tabs are located on a same side of the bare cell or two opposite sides of the bare cell.

In this embodiment, the two tabs are located on the same side of the bare cell. In this way, two bare cells may be connected in parallel or in series. The two tabs are located on two opposite sides of the bare cell. In this way, two bare cells may be connected in series.

In some embodiments, the battery cell includes at least two adapter tabs disposed in the accommodating cavity, the two tabs of the bare cell are a positive electrode tab and a negative electrode tab, and the positive electrode tab and the negative electrode tab of each bare cell are respectively connected to the two adapter tabs.

In this embodiment, parallel connection between the bare cells is implemented.

In some embodiments, the battery cell includes at least three adapter tabs that are all disposed in the accommodating cavity, the three adapter tabs are a first adapter tab, a second adapter tab, and a third adapter tab, the two tabs of the bare cell are respectively a positive electrode tab and a negative electrode tab, all the bare cells are divided into a first unit and a second unit, the positive electrode tabs of the first unit are connected to the first adapter tab, the negative electrode tabs of the second unit are connected to the second adapter tab, and the negative electrode tabs of the first unit and the positive electrode tabs of the second unit are both connected to the third adapter tab.

In this embodiment, series connection between the bare cells is implemented.

In some embodiments, the battery cell includes a thermal insulation pad disposed in the accommodating cavity, a combined structure formed by the tabs and the adapter tabs is close to a first side of the housing, and the thermal insulation pad is located between the first side and the combined structure.

In this embodiment, the thermal insulation pad may achieve thermal insulation and electrical insulation. In a process of welding the tabs and the adapter tabs, the thermal insulation pad may isolate welding waste heat of the adapter tabs and the tabs.

In some embodiments, the battery cell includes an insulating frame disposed in the accommodating cavity, the insulating frame is formed with at least two isolating cavities, and the bare cells in the same group are disposed in the isolating cavities.

In this embodiment, the insulating frame can provide electrical insulation, and the bare cells and the housing are insulated using the insulating frame, thereby preventing the housing from being electrically charged to some extent.

In some embodiments, the insulating frame includes a support frame and two bearing frames, the two bearing frames are spaced apart in a first direction, the bearing frames are formed with the isolating cavities, avoidance openings are formed on opposing sides of the two bearing frames, at least portions of the tabs of the bare cells extend out of the avoidance openings, and the support frame is supported between the two bearing frames.

In this embodiment, in one aspect, the bearing frames bear and insulate the bare cells, so that the bare cells are disposed at intervals in the first direction. In another aspect, the support frame can support the two bearing frames to position and limit the bearing frames, so that the two bearing frames are kept from moving, and the bare cells can be prevented from disengaging from the avoidance openings, thereby limiting and fixing the bare cells.

In some embodiments, the support frame includes a support rod and two baffle plates, the two baffle plates are spaced apart in the first direction, the two baffle plates are respectively connected to the two bearing frames, and the support rod connects the two baffle plates.

In this embodiment, the baffle plates block the avoidance openings to stop the bare cells. The support rod can increase structural strength of the two baffle plates, thereby limiting deformation of the two baffle plates.

In some embodiments, one of each of the bearing frames and the support frame is formed with a locking slot, the other of the bearing frame and the support frame is formed with a protrusion, and the protrusion is inserted into the locking slot.

In this embodiment, the protrusion and the locking slot implement a clamping fit, so that the bearing frames and the support frame can be quickly positioned and assembled.

In some embodiments, an insulating film layer is disposed on a top surface of the bare cell in the thickness direction.

In this embodiment, the insulating film layer can prevent the top surface of the bare cell from being in direct contact with the housing and making the housing electrically charged.

In some embodiments, the battery cell includes a terminal post, and the terminal post is disposed on a peripheral side of the housing.

In this embodiment, compared with that the terminal post is disposed on a top surface or bottom surface of the housing, the terminal post can be kept from interfering with placement of the bare cells, and can further prevent an external object from pressing the terminal post in an up-down direction.

In some embodiments, two terminal posts are respectively located on two sides of the housing in a second direction or a first direction, and the first direction, the second direction, and the thickness direction are perpendicular to each other.

In this embodiment, the two terminal posts are respectively located on two different sides of the housing, so that the two terminal posts are respectively electrically connected to the two adapter tabs.

According to a second aspect, an embodiment of this application provides a battery pack, including any foregoing battery cell and a box body, where the box body includes a bottom plate and a top cover, and an angle between a thickness direction of the bare cell and a plane on which the bottom plate is located ranges from 80 degrees to 90 degrees.

In this embodiment, the angle between the thickness direction of the bare cell and the plane on which the bottom plate is located ranges from 80 degrees to 90 degrees. The bare cells in different groups are arranged side by side, and a height of an upper surface of bare cells in a single battery cell may be relatively low, so that an electrolyte solution infiltration distance in the housing is shortened and more electrolyte solution infiltration channels are provided to immerse all the bare cells with an electrolyte solution to resolve the problem of inadequate electrolyte solution infiltration, thereby avoiding purple spots, circular spots, and uncoated areas on the bare cells.

In some embodiments, the battery pack includes a cushioning pad, a plurality of battery cells are stacked to constitute a module, and at least one cushioning pad is disposed between two adjacent battery cells in the module.

In this embodiment, during use of the battery pack, the battery cells constantly expand, and the cushioning pad can relieve swelling force generated during use, thereby providing cushioning and vibration isolation.

In some embodiments, the box body includes a liquid cooling plate, and the liquid cooling plate is located between the battery cell and the bottom plate.

In this embodiment, the liquid cooling plate is configured to exchange heat with the battery cells, thereby regulating the temperature of the battery cells. The liquid cooling plate is located between the battery cell and the bottom plate to facilitate large-area contact with the battery cell, thereby improving heat exchange efficiency.

According to a third aspect, an embodiment of this application provides a power consuming apparatus, including any foregoing battery pack.

According to a fourth aspect, an embodiment of this application provides an energy storage apparatus, including any foregoing battery pack.

### BRIEF DESCRIPTION OF THE DRAWINGS

FIG. 1 is a graph of swelling force of a bare cell vs. SOH when a thickness of the bare cell is 40 mm in the related technology;
FIG. 2 is a graph of a fracture extension rate of a positive electrode plate of a bare cell vs. SOH when a thickness of the bare cell is 40 mm in the related technology;
FIG. 3 is a schematic structural diagram of a battery cell according to an embodiment of this application;
FIG. 4 is a schematic exploded view of the battery cell shown in FIG. 3, with a support frame omitted;
FIG. 5 is a partial schematic structural diagram of the battery cell shown in FIG. 3;
FIG. 6 is a schematic enlarged view of a position A in FIG. 5;
FIG. 7 is another schematic exploded view of a battery cell according to an embodiment of this application, with a top cover omitted;
FIG. 8 is a schematic structural diagram of a unit according to an embodiment of this application; and
FIG. 9 is a schematic exploded view of a battery pack according to an embodiment of this application.

### DETAILED DESCRIPTION

The following describes embodiments of technical solutions of this application in detail with reference to the accompanying drawings. The following embodiments are only used to illustrate the technical solutions of this application more explicitly, and are thus only interpreted as examples, rather than used to limit the scope of protection of this application.

Unless otherwise defined, the technical terms and scientific terms used herein have the same meanings as how they are generally understood by a person skilled in the art to which this application pertains. The terms used herein are merely used for describing specific embodiments, but are not intended to limit this application.

In the description according to the embodiments of this application, the technical terms "first", "second", and the like are only used to distinguish different objects, and should not be understood as indicating or implying relative importance or implying the number, specific order or primary and secondary relationship of indicated technical features.

Reference herein to an "embodiment" means that a specific feature, structure, or characteristic described in connection with the embodiment can be included in at least one embodiment of this application. Embodiments where this phrase occurs at various locations of the specification do not necessarily refer to the same embodiments, and are not independent or alternative embodiments mutually exclusive to one another. It shall be explicitly and implicitly understood by a person skilled in the art that the embodiments described herein may be combined with other embodiments.

In this embodiment of this application, the at least two groups include two or more groups. At least two includes two or more. The unit "mm" is millimeter. In this embodiment of this application, lower refers to a direction toward the ground, and upper is opposite to lower.

An embodiment of this application provides a battery cell 10. An embodiment of this application further provides a battery pack, including the battery cell 10 according to any one of the embodiments of this application. A power consuming apparatus provided in this embodiment of this application includes the battery pack according to any one of the embodiments of this application. An energy storage apparatus provided in this embodiment of this application includes the battery pack according to any one of the embodiments of this application.

The battery cell 10 provided in this embodiment of this application may be separately used. The battery cell 10 provided in this embodiment of this application may be used as an energy storage battery and/or a power battery. The battery cell 10 may be alternatively used as a battery pack. The battery cell 10 and the battery pack may be used in, but not limited to, a power consuming apparatus or an energy storage apparatus. The power consuming apparatus includes, but is not limited to, a mobile phone, a tablet, a notebook computer, an electric toy, an electric tool, a vehicle, a ship, or a spacecraft. The spacecraft may include an airplane, a rocket, a space shuttle, a spaceship, and the like. The energy storage apparatus includes an energy storage container, an energy storage system, or the like.

For example, the power consuming apparatus in an embodiment of this application is a vehicle. The vehicle may be a fuel powered vehicle, a gas powered vehicle, or a new energy vehicle. The new energy vehicle may be a pure electric vehicle, a hybrid electric vehicle, or an extended range vehicle, etc. The inner part of the vehicle is provided with a battery pack. The battery pack may be disposed at the bottom of the vehicle or the head or tail of the vehicle. The battery pack may be configured to supply power to the vehicle. For example, the battery pack may be used as a power supply for operating the vehicle. In some embodiments, the battery pack can not only serve as a power supply for operating the vehicle, but can also serve as a power supply for driving the vehicle, in place of or partially in place of fuel or natural gas, to provide driving power for the vehicle.

The battery pack may include at least two battery cells 10. The at least two battery cells 10 can be connected in series, parallel, or series-parallel. Series-parallel connection means that both series connection and parallel connection exist among the at least two battery cells 10. The at least two battery cells 10 may be directly connected in series, parallel, or series-parallel. Certainly, the battery cell 10 may be alternatively a form in which at least two battery cells 10 are first connected in series, parallel, or series-parallel to form a module and at least two modules are then connected in series, parallel, or series-parallel to form a whole.

In the embodiments of this application, the battery cell 10 may be a secondary battery. The secondary battery is a battery whose active material can be activated for continuous use through charging after the battery is discharged.

The battery cell 10 may be a lithium-ion battery, a sodium-lithium-ion battery, a sodium-ion battery, a lithium-sulfur battery, or the like. This is not limited in the embodiments of this application.

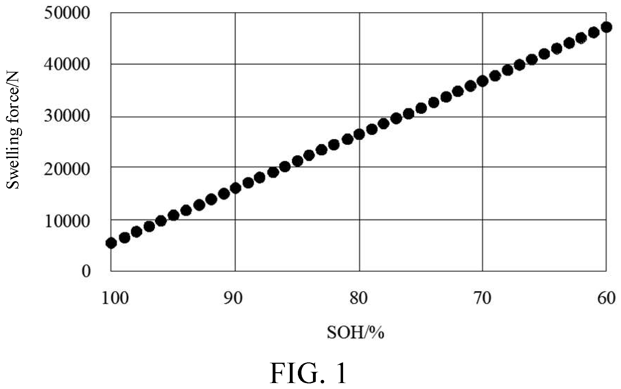

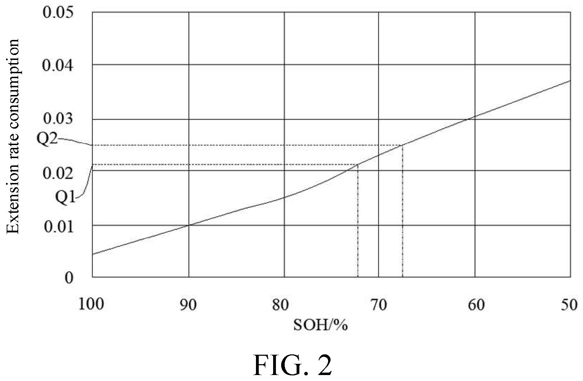

In the related technology, a dimension of a single bare cell in a thickness direction is large. The thickness direction is a direction in which electrode plates of the bare cell are stacked, and major surfaces of the bare cell are perpendicular to the thickness direction. For example, FIG. 1 is a graph of swelling force of a bare cell vs. SOH when a thickness of the bare cell is 40 mm. FIG. 2 is a graph of a fracture extension rate of a positive electrode plate of a bare cell vs. SOH when a thickness of the bare cell is 40 mm, where Q1 is a minimum value, Q2 is an average value, and an area to the right of an average value Q2 in FIG. 2 is a fracture risk zone. In one case, a single bare cell in the battery pack is disposed in an up-down direction, and at least two bare cells are arranged along a horizontal direction. That is, the thickness direction of the bare cell is perpendicular to the up-down direction, and the major surfaces of the bare cell are perpendicular to the horizontal direction. In another case, a single bare cell in the battery pack is disposed in the horizontal direction, and all the bare cells are stacked in the up-down direction. That is, the thickness direction is parallel to the up-down direction. Stacking of all the bare cells in the up-down direction has a problem that electrode plates are prone to fracture. In the foregoing two cases, if the dimension of the battery cell is increased, for example, the thickness of the bare cell, the width of the bare cell, and the width of the electrode plate are significantly increased. If the dimension of the electrode plate is increased, a wicking distance and a drain-back distance of an electrolyte solution in the up-down direction are increased, leading to problems such as inadequate electrolyte solution infiltration (uncoated areas) and disconnection (flow interruption of the electrolyte solution) exist. If the battery cell is a lithium-ion battery, a lithium plating problem easily occurs.

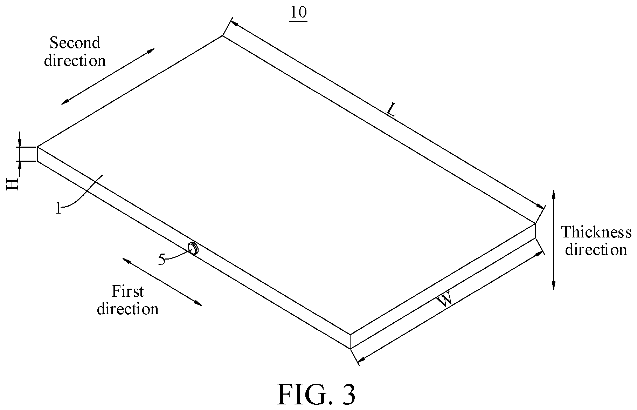

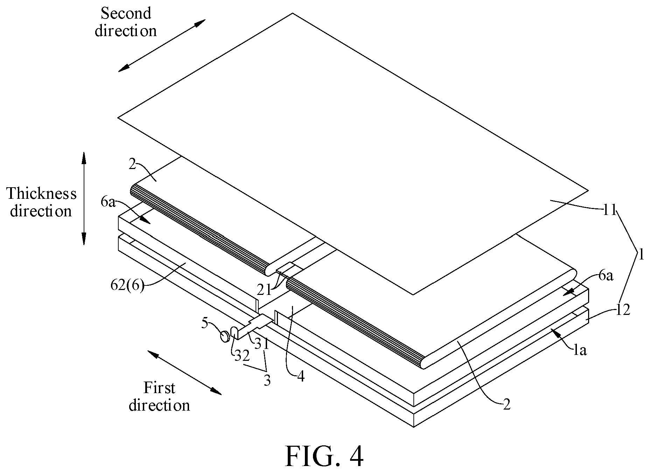

Referring to FIG. 3 and FIG. 4, a battery provided in an embodiment of this application includes a housing 1 and at least two groups of bare cells 2. The housing 1 is formed with an accommodating cavity 1a. The at least two groups of bare cells 2 are all disposed in the accommodating cavity 1a. Each bare cell 2 includes at least two electrode plates. The at least two electrode plates are stacked in a thickness direction. The bare cells 2 in a same group are stacked in the thickness direction. The bare cells 2 in different groups are arranged side by side along a plane perpendicular to the thickness direction.

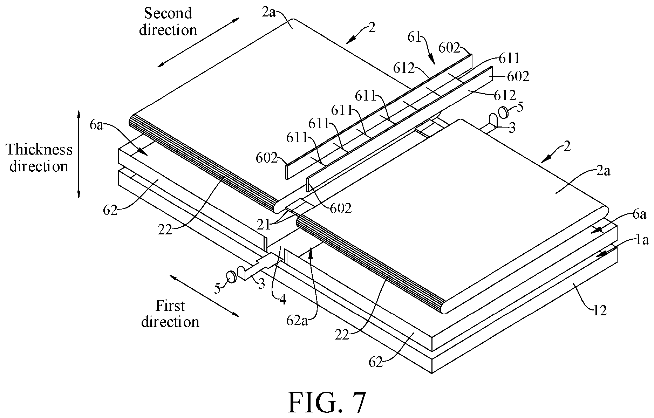

Referring to FIG. 4 and FIG. 7, the bare cells 2 in the same group are stacked in the thickness direction. For example, the major surfaces 2a of the single bare cell 2 is parallel to the plane perpendicular to the thickness direction.

Still referring to FIG. 4 and FIG. 7, the bare cells 2 in different groups are arranged side by side along the plane perpendicular to the thickness direction. That is, instead of being stacked in the thickness direction, the bare cells 2 in different groups are laid flat along the first plane.

For the battery cell 10 provided in this embodiment of this application, the bare cells 2 in different groups are arranged side by side along the plane perpendicular to the thickness direction, thereby reducing a quantity of stacked bare cells 2, and the major surfaces 2a of the bare cells 2 in different groups are kept from pressing each other, so that swelling force on the major surfaces 2a can be reduced, a risk of electrode plate fracture can be reduced, and the service life of the battery cell 10 can be prolonged.

An example in which each group of bare cells 2 includes one bare cell is used. The bare cells 2 in different groups are arranged side by side along the plane perpendicular to the thickness direction. That is, all the bare cells 2 are arranged side by side along the plane perpendicular to the thickness direction. In this way, the major surfaces 2a of all the bare cells 2 are approximately coplanar. In this way, the outer contour shape of the bare cell 2 is approximately cuboid, and the shape of the battery cell 10 is an approximately flat structure. The major surfaces 2a of the bare cells 2 do not overlap with each other, and the major surfaces 2a of the bare cells 2 are kept from pressing each other, so that swelling force of the bare cells 2 can be significantly reduced.

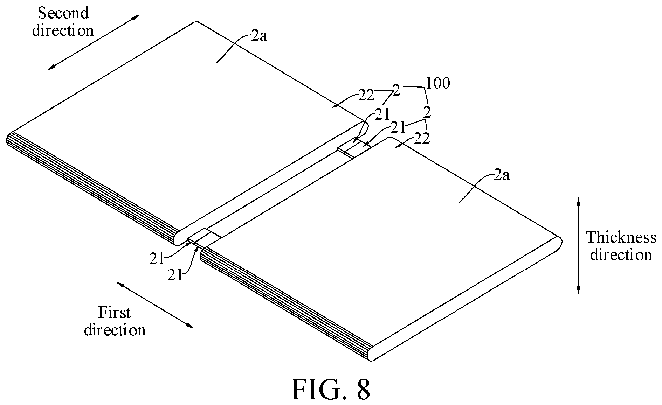

The bare cell 2 is an energy storage structure of the battery cell 10. In an embodiment, referring to FIG. 8, the bare cell 2 includes a separator and a tab 21. Some of the at least two electrode plates are positive electrode plates, and the remainder of the at least two electrode plates are negative electrode plates. The separator is disposed between the positive electrode plate and the negative electrode plate, and the tab 21 is disposed on each of the positive electrode plate and the negative electrode plate. The separator is used for separating the positive electrode plate and the negative electrode plate to prevent the two from being in contact and short-circuited. The positive electrode plate, the negative electrode plate, and the separator may be wound or laminated. The bare cell 2 includes at least two electrode plates and a separator to form a main body 22, and the outer contour shape of the main body 22 is approximately cuboid. The battery cell 10 is charged or discharged through metal ions in an electrolyte solution moving between the positive electrode plate and the negative electrode plate.

In some embodiments, the battery cell 10 includes an electrolyte solution, and the electrolyte solution is disposed in the accommodating cavity 1a.

The battery pack provided in this embodiment of this application includes the battery cell 10 according to any one of the embodiments of this application, the bottom plate, and the top cover 302. An angle between the thickness direction of the bare cell 2 and a plane on which the bottom plate is located ranges from 80 degrees to 90 degrees. The top cover 302 and the bottom plate are disposed opposite in a top-to-bottom direction.

For example, the angle between the thickness direction of the bare cell 2 and the plane on which the bottom plate is located is 80 degrees, 85 degrees, 90 degrees, or the like.

For the battery pack provided in this embodiment of this application, the angle between the thickness direction of the bare cell 2 and the plane on which the bottom plate is located ranges from 80 degrees to 90 degrees. The bare cells 2 in different groups are arranged side by side, and a height of an upper surface of bare cells 2 in a single battery cell 10 may be relatively low, so that an electrolyte solution infiltration distance in the housing 1 is shortened and more electrolyte solution infiltration channels are provided to immerse all the bare cells 2 with an electrolyte solution to resolve the problem of inadequate electrolyte solution infiltration, thereby avoiding purple spots, circular spots, and uncoated areas on the bare cells 2.

In the related technology, the inadequate electrolyte solution infiltration may generally include two cases. In one case, a bare cell has an excessively large height in the up-down direction, which exceeds an electrolyte solution infiltration height in an initial state. In the other case, as time elapses and the quantity of cycles increases, because of volatilization or consumption of the electrolyte solution in the battery cell, the electrolyte solution gradually decreases, and a bare cell gradually has the problem of inadequate electrolyte solution infiltration.

In some embodiments, a height between the bare cell 2 and the bottom plate may range from 30 mm to 80 mm. For example, the height between the bare cell 2 and the bottom plate may be 30 mm, 40 mm, 50 mm, 60 mm, or 80 mm.

For example, the thickness direction is perpendicular to a horizontal plane, that is, the major surfaces 2a of the single bare cell 2 are parallel to the horizontal plane. The bare cells 2 in different groups are arranged side by side perpendicular to the horizontal plane.

For example, an example in which each group of bare cells 2 includes one bare cell is used. The bare cells 2 in different groups are arranged side by side along the horizontal plane. Still referring to FIG. 4 and FIG. 7, in a single battery cell 10, the major surfaces 2a of the single bare cell 2 faces the up-down direction, and different groups of bare cells 2 are arranged side by side along a horizontal plane. That is, all bare cells 2 are tiled along a horizontal plane. In this way, all the bare cells 2 are approximately located at the same horizontal height. In this way, the shape of the appearance of the battery cell 10 is approximately a horizontally placed flat structure.

For the battery pack provided in this embodiment of this application, the bare cell 2 is disposed along the horizontal plane. The bare cells 2 in different groups are arranged side by side along the horizontal plane, and a height of an upper surface of bare cells 2 in a single battery cell 10 may be relatively low, so that an electrolyte solution infiltration distance in the housing 1 is shortened and more electrolyte solution infiltration channels are provided to immerse all the bare cells 2 with an electrolyte solution to resolve the problem of inadequate electrolyte solution infiltration, thereby avoiding purple spots, circular spots, and uncoated areas on the bare cells 2.

In some embodiments, a total thickness of each group of bare cells 2 in the thickness direction ranges from 30 mm to 80 mm. The total thickness of each group of bare cells 2 in the thickness direction is a sum of thicknesses of the bare cells 2 in the same group. For example, the total thickness of each group of bare cells 2 in the thickness direction is 30 mm, 40 mm, 45 mm, 50 mm, 60 mm, 70 mm, 80 mm, or the like. A single bare cell 2 includes at least two electrode plates. Each group of bare cells 2 includes at least one bare cell 2. The total thickness of each group of bare cells 2 in the thickness direction ranges from 30 mm to 80 mm, so that compressive force between the electrode plates and energy density of each group of bare cells 2 are moderate, and while energy density is maintained, a risk of electrode plate fracture is reduced.

In some embodiments, a dimension of a single bare cell in the thickness direction ranges from 8 mm to 20 mm. For example, the dimension of a single bare cell in the thickness direction is 8 mm, 10 mm, 12 mm, 13 mm, 15 mm, 20 mm, or the like. The dimension of a single bare cell 2 in the thickness direction ranges from 8 mm to 20 mm, so that manufacturing difficulty of the bare cell 2 is moderate, the yield can be improved, and the bare cell 2 has suitable energy density.

In some embodiments, a quantity of the bare cells in each group ranges from 1 to 4. The quantity of the bare cells in each group is the number of bare cells in the same group. For example, the quantity of the bare cells in each group is 1, 2, 3, or 4. Through such a design, stacking difficulty can be reduced.

In some embodiments, the material of the separator includes, but is not limited to, polypropylene and/or polyethylene.

In some embodiments, the positive electrode plate includes a positive electrode current collector and a positive electrode active material layer, and the positive electrode active material layer is attached to the surface of the positive electrode current collector. The tab 21 connected to the positive electrode plate is defined as a positive electrode tab 21. The material of the positive electrode tab 21 may be a positive electrode current collector to which no positive electrode active material layer is attached.

In some embodiments, the negative electrode plate includes a negative electrode current collector and a negative electrode active material layer, and the negative electrode active material layer is attached to the surface of the negative electrode current collector. The tab 21 connected to the negative electrode plate is defined as a negative electrode tab 21. The material of the negative electrode tab 21 may be a negative electrode current collector to which no negative electrode active material layer is attached.

In some embodiments, the negative electrode plate may include only the negative electrode current collector, and no negative electrode active material layer is attached. After the battery cell 10 is charged for the first time, metal in the material of the positive electrode plate migrates to the surface of the negative electrode current collector, and forms a metal layer on the surface of the negative electrode current collector.

For example, the battery cell 10 is a lithium-ion battery. In an embodiment, the material of the positive electrode current collector may be aluminum, and the positive electrode active material layer may be made of lithium cobalt oxide, lithium iron phosphate, ternary lithium, lithium manganese oxide, or the like. The material of the negative electrode current collector may be copper, and the negative electrode active material layer may be made of carbon, silicon, or the like.

The battery cell 10 provided in this embodiment of this application may be a large-size battery. For example, in an embodiment, referring to FIG. 1, the housing 1 may have a length L ranging from 300 mm to 1500 mm, a width W ranging from 200 mm to 800 mm, and a thickness H ranging from 40 mm to 330 mm. A thickness direction of the housing 1 is the same as that of the bare cell 2, and the battery cell 10 entirely has a horizontally placed flat structure. In this embodiment, the battery cell 10 is a large-size battery. For example, the bare cell 2 is disposed in the horizontal direction, and the bare cells 2 in different groups are arranged side by side along the horizontal direction, so that an electrolyte solution infiltration distance is shortened, and electrolyte solution infiltration channels in four directions may further be provided, thereby resolving the problem of inadequate electrolyte solution infiltration.

In an embodiment, referring to FIG. 4, the housing 1 includes a top cover 11 and a shell 12. The shell 12 is a hollow structure with a top-side opening. The top cover 11 closes the top-side opening of the shell 12 to jointly define the accommodating cavity 1a.

It should be noted that the top side and the bottom side are two opposite sides in the thickness direction of the bare cell.

The top cover 11 and the shell 12 may be detachably connected or non-detachably connected. The top cover 11 and the shell 12 may be connected in a sealed manner, and the accommodating cavity 1a may be a sealed cavity. For example, the top cover 11 and the shell 12 may be welded, for example, laser-welded. In this way, the top cover 11 and the shell 12 are connected in a sealed manner through welding.

The top cover 11 and the shell 12 may be made of a same material. For example, the top cover 11 and the shell 12 are both made of at least one of materials such as aluminum and steel.

In an embodiment, referring to FIG. 4 and FIG. 8, each bare cell 2 includes at least two tabs 21 connected to the electrode plate.

In an embodiment, referring to FIG. 4 and FIG. 8, the two tabs 21 are located on the same side of the bare cell 2. In this way, two bare cells 2 may be connected in parallel or in series.

In another embodiment, the two tabs 21 are located on two opposite sides of the bare cell 2. In this way, two bare cells 2 may be connected in series.

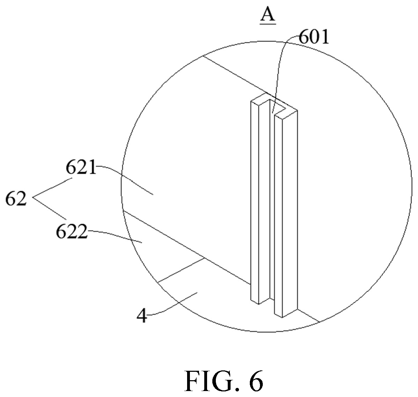

In an embodiment, referring to FIG. 4 to FIG. 8, the battery cell 10 includes at least two adapter tabs 3 disposed in the accommodating cavity 1a, the two tabs 21 of the bare cell 2 are a positive electrode tab and a negative electrode tab, and the positive electrode tab and the negative electrode tab of each bare cell 2 are respectively connected to the two adapter tabs 3. In this way, parallel connection between the bare cells 2 is implemented.

In an embodiment, the battery cell includes at least three adapter tabs 3 that are all disposed in the accommodating cavity 1a, the three adapter tabs 3 are a first adapter tab, a second adapter tab, and a third adapter tab, the two tabs of the bare cell are respectively a positive electrode tab and a negative electrode tab, all the bare cells are divided into a first unit and a second unit, the positive electrode tabs of the first unit are connected to the first adapter tab, the negative electrode tabs of the second unit are connected to the second adapter tab, and the negative electrode tabs of the first unit and the positive electrode tabs of the second unit are both connected to the third adapter tab. In this way, series connection between the bare cells 2 is implemented.

It should be noted that the first adapter tab, the second adapter tab, and the third adapter tab are all adapter tabs 3, and for ease of description, are distinguished in names.

In an embodiment, referring to FIG. 4 and FIG. 8, each bare cell 2 includes the tabs 21 connected to the electrode plates. Two groups of bare cells 2 are spaced apart in a first direction to form a unit 100. The tabs of the two groups of bare cells 2 of the unit 100 are disposed opposite to each other. The first direction is perpendicular to the thickness direction. That is, the tabs 21 are located on a side of the bare cell 2 in the first direction. In the unit 100, the tabs 21 of one group of bare cells 2 face the tabs 21 of another group of bare cells 2.

In this embodiment, the tabs 21 are electrically connected to the terminal post 5 of the battery cell 10 by the adapter tabs 3, so that the bare cell 2 is connected to an external circuit. The tabs 21 of the two groups of bare cells 2 of the unit 100 are disposed opposite to each other, so that the tabs 21 of the two groups of bare cells 2 of the unit 100 are connected to the adapter tabs 3, thereby reducing routing difficulty.

In an embodiment, referring to FIG. 4 and FIG. 8, the at least two tabs 21 of the single bare cell 2 may be spaced apart in the second direction. In the single bare cell 2, at least one of the at least two tabs 21 is a positive electrode tab 21, and at least one of the at least two tabs 21 is a negative electrode tab 21. That is, the at least two tabs 21 of the single bare cell 2 are staggered in the second direction, so that the tabs 21 are respectively connected to the adapter tabs 3.

In some embodiments, referring to FIG. 4 and FIG. 8, the battery cell 10 may include one unit 100. That is, two groups of bare cells 2 are disposed in the battery cell 10.

In some other embodiments, the battery cell 10 may include at least two units 100, for example, two units 100 or three units 100. That is, four groups or six groups of bare cells 2 are disposed in the battery cell 10.

In an embodiment, referring to FIG. 4 to FIG. 8, the battery cell 10 includes the adapter tabs 3 disposed in the accommodating cavity 1a, the tabs 21 are disposed along the plane perpendicular to the thickness direction, a portion of each adapter tab 3 is located on a side of the tabs 21 in the thickness direction, and the tabs of the two groups of bare cells 2 of the unit 100 are connected to the adapter tabs 3. For example, in some embodiments, the tabs 21 are disposed in the horizontal direction, and a portion of the adapter tab 3 is located below the tabs 21. The adapter tab 3 is configured to implement the electrical connection between the tabs 21 and the terminal post 5. In one aspect, the tabs 21 are disposed along the plane perpendicular to the thickness direction, and a thickness direction of the tabs 21 is the same as the thickness direction of the bare cell 2. In this way, the tabs 21 do not need to be bent. In another aspect, a portion of the adapter tab 3 is located on a side of the tabs 21 in the thickness direction. For example, a portion of the adapter tab 3 is located below the tabs 21. The adapter tab 3 may support the tabs 21, and further facilitate large-area connection between the tabs 21 and the adapter tab 3.

In some embodiments, the tabs 21 are welded to the adapter tab 3. For example, the tabs 21 and the adapter tab 3 are ultrasonically welded or laser-welded. A portion of the adapter tab 3 is located below the tabs 21. The tabs 21 may be welded to a portion of the adapter tab 3 located below the tabs 21, and has an open space above, thereby facilitating a welding operation with a welding tool.

In an embodiment, referring to FIG. 4, FIG. 5, and FIG. 8, the battery includes a thermal insulation pad 4 disposed in the accommodating cavity 1a, a combined structure formed by the tabs 21 and the adapter tabs 3 is close to a first side of the housing 1, and the thermal insulation pad 4 is located between the first side and the combined structure. The thermal insulation pad 4 may achieve thermal insulation and electrical insulation. In a process of welding the tabs 21 and the adapter tabs 3, the thermal insulation pad 4 may isolate welding waste heat of the adapter tabs 3 and the tabs 21.

For example, the thermal insulation pad 4 is located between two groups of bare cells 2 of the unit 100, and the thermal insulation pad 4 is disposed on a side of the adapter tab 3 away from the tabs 21 in the thickness direction. For example, the thermal insulation pad 4 is disposed below the adapter tab 3. The thermal insulation pad 4 may achieve thermal insulation and electrical insulation. In a process of welding the tabs 21 and the adapter tabs 3, the thermal insulation pad 4 may isolate welding waste heat of the adapter tabs 3 and the tabs 21.

The material of the thermal insulation pad 4 is not limited, and the material of the thermal insulation pad 4 includes, but is not limited to, polyimide.

In an embodiment, referring to FIG. 3 to FIG. 5, the battery includes the terminal post 5, and the terminal post 5 is disposed on a peripheral side of the housing 1. Through such a design, compared with that the terminal post 5 is disposed on a top surface or bottom surface of the housing 1, the terminal post 5 can be kept from interfering with placement of the bare cells 2, and can further prevent an external object from pressing the terminal post 5 in the up-down direction.

It should be noted that the peripheral side of the housing 1 is a surface surrounding a straight line extending along the thickness direction.

In an embodiment, the terminal post 5 may be alternatively disposed on the top surface of the housing 1.

In some embodiments, the terminal post 5 and the adapter tab 3 may be riveted or welded. The terminal post 5 and the adapter tab 3 are riveted, so that the process is simpler, and the operation is simple and convenient.

In an embodiment, referring to FIG. 3 to FIG. 5, the adapter tab 3 includes a tab body 31 and a vertical portion 32. The tab body 31 is placed along the plane perpendicular to the thickness direction, and the tab body 31 is located on a side of the tabs 21 in the thickness direction. The vertical portion 32 extends from the tab body 31 to a side on which the tabs 21 are located. For example, the tab body 31 is placed in the horizontal direction and disposed below the tabs 21, and the vertical portion 32 extends upward from the tab body 31. The tab body 31 is connected to the tabs 21, and the vertical portion 32 is connected to the terminal post 5. The structure of the adapter tab 3 is simple.

In an embodiment, referring to FIG. 3 to FIG. 5, two terminal posts 5 are respectively located on two sides of the housing 1 in a second direction or a first direction, and the first direction, the second direction, and the thickness direction are perpendicular to each other. One of the two terminal posts 5 is a positive terminal post 5, and the other is a negative terminal post 5. The two terminal posts 5 are respectively located on two different sides of the housing 1, so that the two terminal posts 5 are respectively electrically connected to the two adapter tabs 3.

It should be understood that, in this embodiment of this application, a thickness direction of the battery cell 10 when being horizontally placed is consistent with the up-down direction. In some embodiments, the first direction may be a length direction of the housing 1, and the second direction is a width direction of the housing 1. In some other embodiments, the first direction may be the width direction of the housing 1, and the second direction is the length direction of the housing 1.

In some embodiments, the shell 12 and the terminal post 5 may be a pre-assembled structure. That is, the shell 12 and the terminal post 5 may be pre-assembled prior to the final assembly line. In this way, on the final assembly line of battery production, the shell 12 and the terminal post 5 are fed as an integrated component, thereby improving production efficiency.

For example, in an embodiment, referring to FIG. 4 and FIG. 8, the tabs 21 of the two groups of bare cells 2 of the unit 100 are disposed opposite to each other. The tabs 21 of the two groups of bare cells 2 of the unit 100 may be in a one-to-one correspondence, the terminal posts 5 are disposed on the peripheral side of the housing 1, and the terminal posts 5 and the adapter tab 3 are disposed in a one-to-one correspondence. That is, one terminal post 5 corresponds to one adapter tab 3. The adapter tab 3 is used for connecting the tabs 21 of the two groups of bare cells 2 to the corresponding terminal posts 5, thereby reducing structural members and quickly implementing electrical connection.

In a specific embodiment, referring to FIG. 4 and FIG. 8, each group of bare cells 2 includes one bare cell 2, and two bare cells 2 are spaced apart in the first direction. For ease of description, two terminal posts 5 are defined as a first terminal post and a second terminal post. Two adapter tabs 3 are defined as a first adapter tab and a second adapter tab. The first terminal post and the second terminal post are respectively located on two sides of the housing 1 in the second direction. The first adapter tab is connected to the first terminal post. The second adapter tab is connected to the second terminal post. The first adapter tab is connected to some of the tabs 21 of the two bare cells 2. The second adapter tab 3 is connected to the remaining tabs 21 of the two bare cells 2. In this way, one of the first terminal post and the second terminal post is a positive terminal post, and the other of the first terminal post and the second terminal post is a negative terminal post.

In an embodiment, referring to FIG. 4 to FIG. 7, the battery includes an insulating frame 6 disposed in the accommodating cavity 1a, the insulating frame 6 is formed with at least two isolating cavities 6a, and the bare cells 2 in the same group are disposed in the isolating cavities 6a. The insulating frame 6 can provide electrical insulation, and the bare cells 2 and the housing 1 are insulated using the insulating frame 6, thereby preventing the housing 1 from being electrically charged to some extent.

In an embodiment, referring to FIG. 4 to FIG. 7, a mounting opening is formed on a top side of the insulating frame 6 in the thickness direction. The mounting opening is in communication with the isolating cavities 6a, and the bare cells 2 in the same group enter and exit the isolating cavities 6a through the mounting opening. For example, one group of bare cells 2 may be placed in each isolating cavity 6a. The insulating frame 6 can provide electrical insulation, and the mounting opening facilitates placement of the bare cells 2 in the isolating cavities 6a from top to bottom. The bottom surface of the isolating cavity 6a can support the bare cells 2 and provide insulating protection. The bare cells 2 are placed in the isolating cavities 6a, and the bare cells 2 and the housing 1 are insulated using the insulating frame 6, thereby preventing the housing 1 from being electrically charged to some extent.

In an embodiment, referring to FIG. 4 to FIG. 7, the insulating frame 6 includes a support frame 61 and two bearing frames 62, the two bearing frames 62 are spaced apart in a first direction, the bearing frames 62 are formed with the mounting opening and the isolating cavities 6a, avoidance openings 62a are formed on opposing sides of the two bearing frames 62, at least portions of the tabs 21 of the bare cells 2 extend out of the avoidance openings 62a, and the support frame 61 is supported between the two bearing frames 62. The avoidance opening 62a facilitates extension of the tab 21 of the bare cell 2 to be connected to the adapter tab 3. In one aspect, the bearing frames 62 bear and insulate the bare cells 2, so that the bare cells 2 are disposed at intervals in the first direction. In another aspect, the support frame 61 can support the two bearing frames 62 to position and limit the bearing frames 62, so that the two bearing frames 62 are kept from moving, and the bare cells 2 can be prevented from disengaging from the avoidance openings 62a, thereby limiting and fixing the bare cells 2.

In some embodiments, the bearing frames 62 may be connected to a peripheral surface of the accommodating cavity 1a. For example, the bearing frame 62 may be bonded to the peripheral surface of the accommodating cavity 1a by a double-sided adhesive tape.

In an embodiment, the thermal insulation pad 4 may be thermally fused to the insulating frame 6 to fix the thermal insulation pad 4.

In an embodiment, referring to FIG. 4 to FIG. 7, the bearing frame 62 includes a frame 621 and a support plate 622. The frame 621 surrounds an outer periphery of the bare cell 2. The support plate 622 is disposed at the bottom of the frame 621. The support plate 622 and the frame 621 jointly define the mounting opening, the avoidance opening 62a, and the isolating cavities 6a. A top-side opening defined by the frame 621 is the mounting opening, an opening that is defined by the frame 621 and that is on one side in the first direction is the avoidance opening 62a, and spaces that are jointly surrounded by the frame 621 and the support plate 622 are the isolating cavities 6a. The bearing frame 62 has a simple structure, is easy to manufacture, and can effectively isolate the bare cells 2 from the housing 1.

In an embodiment, the bearing frame 62 and the shell 12 may be a pre-assembled structure. That is, the bearing frame 62 and the shell 12 may be pre-assembled prior to the final assembly line. In this way, on the final assembly line of production, the bearing frame 62 and the shell 12 are fed as an integrated component, so that a process of covering the bare cells 2 with the bearing frame 62 is canceled on the final assembly line, thereby improving production efficiency.

In an embodiment, referring to FIG. 4 to FIG. 7, the support frame 61 includes a support rod 611 and two baffle plates 612, the two baffle plates 612 are spaced apart in the first direction, the two baffle plates 612 are respectively connected to the two bearing frames 62, and the support rod 611 connects the two baffle plates 612. The baffle plates 612 block the avoidance openings 62a to stop the bare cells 2. The support rod 611 can increase structural strength of the two baffle plates 612, thereby limiting deformation of the two baffle plates 612.

In some embodiments, the support rod 611 and the two baffle plates 612 may be an integrally formed structure. In this way, an assembly process is simplified, and production efficiency is improved.

In some embodiments, the baffle plates 612 may thermally fused to the bearing frame 62.

In an embodiment, referring to FIG. 7, at least two support rods 611 are provided, and the at least two support rods 611 are spaced apart in the second direction. The at least two support rods 611 can provide more stable support, thereby reducing force on individual support rods 611.

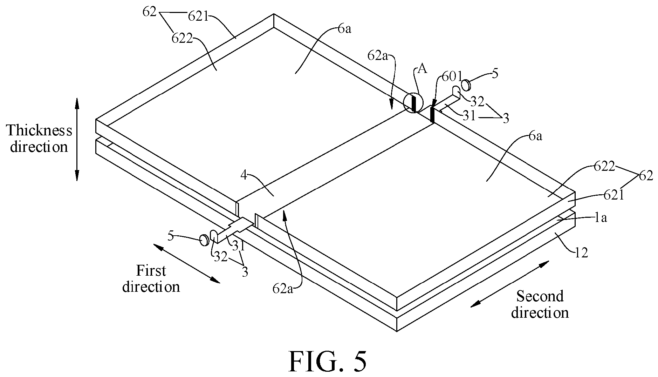

In an embodiment, referring to FIG. 5 to FIG. 7, one of each of the bearing frames 62 and the support frame 61 is formed with a locking slot 601, the other of the bearing frame 62 and the support frame 61 is formed with a protrusion 602, and the protrusion 602 is inserted into the locking slot 601. The protrusion 602 and the locking slot 601 implement a clamping fit, so that the bearing frames 62 and the support frame 61 can be quickly positioned and assembled.

In an embodiment, referring to FIG. 5 to FIG. 7, the bearing frame 62 is formed with a locking slot 601, an end portion of the baffle plate 612 in the second direction is a protrusion 602, and the locking slot 601 opens toward the baffle plate 612 in the second direction. In an assembly process, the end portion of the baffle plate 612 in the second direction is inserted into the locking slot 601, so that the support frame 61 and the bearing frames 62 can be quickly assembled.

For example, in an embodiment, the frame 621 includes a main frame and an end head, the end head is formed with a locking slot 601, and the end head is connected to the main frame. The end head and the main frame may be made of different materials. For example, the hardness of the end head may be greater than the hardness of the main frame to increase the structural strength of the end head, thereby improving connection stability between the end head and the support frame 61.

For example, the material of the support frame 61 is at least one of polyethylene, polypropylene, or polytetrafluoroethylene.

For example, the main frame and the support plate 622 may both be made of at least one of polyethylene, polypropylene, or polytetrafluoroethylene.

In an embodiment, an insulating film layer is disposed on a top surface of the bare cell 2 in the thickness direction. For example, an insulating film layer is disposed on the upper surface of the bare cell 2. The insulating film layer can prevent the top surface of the bare cell 2 from being in direct contact with the housing 1 and making the housing 1 electrically charged.

For example, the material of the insulating film layer includes, but is not limited to, polyethylene terephthalate.

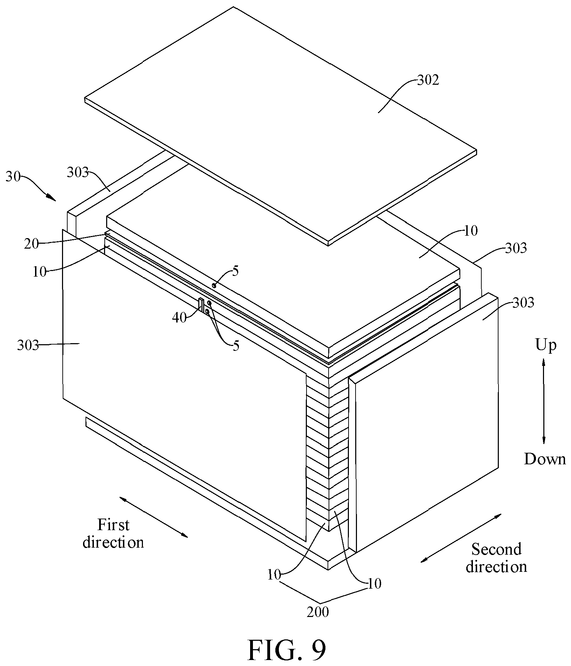

In an embodiment, referring to FIG. 9, the battery pack includes a cushioning pad 20, a plurality of battery cells 10 are stacked to constitute a module 200, and at least one cushioning pad 20 is disposed between two adjacent battery cells 10 in the module 200. During use of the battery pack, the battery cells 10 constantly expand, and the cushioning pad 20 can relieve swelling force generated during use, thereby providing cushioning and vibration isolation.

In an embodiment, referring to FIG. 9, the battery pack includes a liquid cooling plate 301, and the liquid cooling plate 301 is located between the battery cell 10 and the bottom plate. For example, the module 200 is located above the liquid cooling plate 301. The liquid cooling plate 301 is configured to exchange heat with the battery cells 10, thereby regulating the temperature of the battery cells 10. The liquid cooling plate 301 is located between the battery cell 10 and the bottom plate to facilitate large-area contact with the battery cell 10, thereby improving heat exchange efficiency.

For example, the battery cells 10 are located above the liquid cooling plate 301, so that the center of gravity of the battery pack is low, and the liquid cooling plate 301 can be kept from interfering with arrangement of structures such as busbars in the battery pack.

The battery pack may further include a box body 30, and the battery cells 10 may be placed in the box body 30. In some embodiments, the liquid cooling plate 301 may be used as a bottom plate of the box body 30. In some other embodiments, the bottom plate is disposed on a bottom side of the liquid cooling plate 301. That is, the box body 30 includes both the liquid cooling plate 301 and the bottom plate.

In an embodiment, referring to FIG. 9, the box body 30 includes the top cover 302, four side panels 303, and the liquid cooling plate 301. The top cover 302 and the liquid cooling plate 301 are both disposed in the horizontal direction. The four side panels 303 are disposed in the up-down direction. The top cover 302, the liquid cooling plate 301, and the four side panels 303 jointly define a hollow hexahedral structure. That is, the liquid cooling plate 301 may exchange heat with the battery cells 10 and may also be used as a part of the box body 30 to provide support.

In an embodiment, a fluid channel configured to circulate a coolant may be formed in the liquid cooling plate 301, so that the coolant flows in the fluid channel, thereby exchanging heat with the battery cells 10.

The type of the coolant includes, but is not limited to, water.

In an embodiment, referring to FIG. 3 and FIG. 9, the battery pack includes the battery cell 10 according to any one of the embodiments of this application and a terminal block 40. The battery cell 10 includes a terminal post 5, and the terminal post 5 is disposed on the peripheral side of the housing 1. The thickness direction is perpendicular to the horizontal plane. The terminal block 40 is located on a side on which the terminal post 5 of the battery cell 10 is located for connection to the terminal post 5. The terminal block 40 is connected to the terminal post 5 to implement connection to an external circuit. The terminal block 40 is disposed on the peripheral side of the battery cell 10, so that the terminal block 40 can be prevented from increasing a height dimension of the battery pack in the up-down direction, and a distance between the terminal block 40 and the terminal post 5 can be short, thereby reducing the arrangement of electric routing such as cables and reducing costs.

In an embodiment, referring to FIG. 3 and FIG. 9, two terminal posts 5 are respectively located on two sides of the housing 1 in the second direction, and two terminal blocks 40 are respectively located on two sides of the battery cell 10 in the second direction. In this way, the terminal blocks 40 are in a one-to-one correspondence with the terminal posts 5, so that the terminal block 40 is connected to the terminal posts 5 of the plurality of battery cells 10 in the module 200.

In an embodiment, referring to FIG. 3 and FIG. 9, two terminal posts 5 are respectively located on two sides of the housing 1 in the first direction, and two terminal blocks 40 are respectively located on two sides of the battery cell 10 in the first direction. In this way, the terminal blocks 40 are in a one-to-one correspondence with the terminal posts 5, so that the terminal block 40 is connected to the terminal posts 5 of the plurality of battery cells 10 in the module 200.

The foregoing embodiments are merely intended for describing the technical solutions of this application other than limiting this application. Although this application is described in detail with reference to the foregoing embodiments, persons of ordinary skill in the art should understand that modifications may still be made to the technical solutions described in the foregoing embodiments or equivalent replacements may be made to some or all technical features thereof, without making the essence of the corresponding technical solutions depart from the scope of the technical solutions of embodiments of this application. Notably, all technical features described in the various embodiments may be combined in any manner, provided that no structural conflict exists.

## Claims

1. A battery cell, comprising:
a housing, formed with an accommodating cavity; and
at least two groups of bare cells, all disposed in the accommodating cavity, wherein each bare cell comprises at least two electrode plates, the at least two electrode plates are stacked in a thickness direction, the bare cells in a same group are stacked in the thickness direction, and the bare cells in different groups are arranged side by side along a plane perpendicular to the thickness direction.

2. The battery cell according to claim 1, wherein a total thickness of each group of bare cells in the thickness direction ranges from 30 mm to 80 mm.

3. The battery cell according to claim 1, wherein a dimension of a single bare cell in the thickness direction ranges from 8 mm to 20 mm.

4. The battery cell according to claim 1, wherein a quantity of the bare cells in each group ranges from 1 to 4.

5. The battery cell according to claim 1, wherein each bare cell comprises at least two tabs connected to the electrode plates, and the two tabs are located on a same side of the bare cell or two opposite sides of the bare cell.

6. The battery cell according to claim 5, wherein the battery cell comprises at least two adapter tabs disposed in the accommodating cavity, the two tabs of the bare cell are a positive electrode tab and a negative electrode tab, and the positive electrode tab and the negative electrode tab of each bare cell are respectively connected to the two adapter tabs.

7. The battery cell according to claim 5, wherein the battery cell comprises at least three adapter tabs that are all disposed in the accommodating cavity, the three adapter tabs are a first adapter tab, a second adapter tab, and a third adapter tab, the two tabs of the bare cell are respectively a positive electrode tab and a negative electrode tab, all the bare cells are divided into a first unit and a second unit, the positive electrode tabs of the first unit are connected to the first adapter tab, the negative electrode tabs of the second unit are connected to the second adapter tab, and the negative electrode tabs of the first unit and the positive electrode tabs of the second unit are both connected to the third adapter tab.

8. The battery cell according to claim 5 or 6, wherein the battery cell comprises a thermal insulation pad disposed in the accommodating cavity, a combined structure formed by the tabs and the adapter tabs is close to a first side of the housing, and the thermal insulation pad is located between the first side and the combined structure.

9. The battery cell according to claim 1, wherein the battery cell comprises an insulating frame disposed in the accommodating cavity, the insulating frame is formed with at least two isolating cavities, and the bare cells in the same group are disposed in the isolating cavities.

10. The battery cell according to claim 9, wherein the insulating frame comprises a support frame and two bearing frames, the two bearing frames are spaced apart in a first direction, the bearing frames are formed with the isolating cavities, avoidance openings are formed on opposing sides of the two bearing frames, at least portions of the tabs of the bare cells extend out of the avoidance openings, and the support frame is supported between the two bearing frames.

11. The battery cell according to claim 10, wherein the support frame comprises a support rod and two baffle plates, the two baffle plates are spaced apart in the first direction, the two baffle plates are respectively connected to the two bearing frames, and the support rod connects the two baffle plates.

12. The battery cell according to claim 10, wherein one of each of the bearing frames and the support frame is formed with a locking slot, the other of the bearing frame and the support frame is formed with a protrusion, and the protrusion is inserted into the locking slot.

13. The battery cell according to claim 1, wherein an insulating film layer is disposed on a top surface of the bare cell in the thickness direction.

14. The battery cell according to claim 1, wherein the battery cell comprises a terminal post, and the terminal post is disposed on a peripheral side of the housing.

15. The battery cell according to claim 14, wherein two terminal posts are respectively located on two sides of the housing in a second direction or a first direction, and the first direction, the second direction, and the thickness direction are perpendicular to each other.

16. A battery pack, comprising the battery cell according to any one of claims 1 to 15 and a box body, wherein the box body comprises a bottom plate and a top cover, and an angle between a thickness direction of the bare cell and a plane on which the bottom plate is located ranges from 80 degrees to 90 degrees.

17. The battery pack according to claim 16, wherein the battery pack comprises a cushioning pad, a plurality of battery cells are stacked to constitute a module, and at least one cushioning pad is disposed between two adjacent battery cells in the module.

18. The battery pack according to claim 16, wherein the battery pack comprises a liquid cooling plate, and the liquid cooling plate is located between the battery cell and the bottom plate.

19. A power consuming apparatus, comprising the battery pack according to any one of claims 16 to 18.

20. An energy storage apparatus, comprising the battery pack according to any one of claims 16 to 18.
